# EUROPEAN PATENT SPECIFICATION

(11) **EP 1 436 962 B1**
(45) Date of publication and mention of the grant of the patent: **28.09.2005**
(21) Application number: 01274544.4
(22) Date of filing: 11.10.2001
(51) Int. Cl.: H04L 29/06, H04Q 7/38

(54) **METHOD AND SYSTEM FOR MANAGING DATA FLOW BETWEEN MOBILE NODES, ACCESS ROUTERS AND PEER NODES**
VERFAHREN UND SYSTEM ZUM VERWALTEN VON DATENFLÜSSEN ZWISCHEN MOBILEN KNOTEN, ZUGANGSROUTERN UND GLEICHRANGIGEN KNOTEN
PROCEDE ET SYSTEME DE GESTION D'UN FLUX DE DONNEES ENTRE DES NOEUDS MOBILES, DES ROUTEURS D'ACCES ET DES NOEUDS HOMOLOGUES

(43) Date of publication of application: 14.07.2004
(73) Proprietor: Nokia Corporation, 02150 Espoo (FI)
(72) Inventor: GRECH, Sandro, FIN-00550 Helsinki (FI); RAJANIEMI, Jaakko, c/o Nokia Corporation, FIN-02150 Espoo (FI); SERNA, Pedro, E-29018 Malaga (ES)
(74) Representative: TBK-Patent
(86) International application number: PCT/EP2001/011787
(87) International publication number: WO 2003/034683

(56) References cited:
- US-B1- 6 256 300
- G. DOMMETY: "Fast Handovers for Mobile IPv6" INTERNET DRAFT, [Online] 1 January 2001 (2001-01-01), XP002201929 Retrieved from the Internet: <URL:http://www.mcl.hu/micromob/download/d raft-ietf-mobileip-fast-mipv6-03.txt> [retrieved on 2002-06-11]
- MALINEN: "Mobile IPv6 Regional Registrations" DRAFT-MALINEN-MOBILEIP-REGREG6-00.TXT, [Online] 14 July 2000 (2000-07-14), XP002201930 Retrieved from the Internet: <URL:people.nokia.net/charliep/txt/regreg6 regreg6.txt> [retrieved on 2002-06-12]
- PERKINS: A GENERAL IPV6 HANDOVER DOCUMENT, [Online] 2 October 2000 (2000-10-02), XP002201931 owner-mipv6-handoff sunroof.eng.sun.com Retrieved from the Internet: <URL:http://playground.sun.com/pub/mobile- ip/FH-archive/msg00027.html> [retrieved on 2002-06-11]

## Description

### FIELD AND BACKGROUND OF THE INVENTION

The invention generally relates to Mobile IP (Internet Protocol), and in particular to a mechanism for overcoming problems associated with Mobile IP under frequent change of care-of address by the Mobile Node (MN).

Mobile IP is a technology which allows a Mobile Node (MN) like portable computer, cellular phone or personal digital assistants to travel while still retaining its Internet Protocol (IP) address. When the Mobile Node is located in foreign networks the Correspondent Node (CN) gets the current address (CoA) from Home Agent (HA). The Correspondent Node is any node (another Mobile Node, fixed Internet node or some network element) that sends or receives a packet to/from the Mobile Node.

Because Mobile IPv6 (MIPv6) is the up-to-date version of the Mobile IP, it is used to describe the invention. Notice that instead of the Mobile IPv6 the Mobile IPv4 can be used as well.

MIPv6 is designed over an end-to-end signaling paradigm, where only the Home Agent (HA) and Correspondent Nodes (CNs) adjust to the layer 3 (L3) movement of a Mobile Node (MN). Due to this, Mobile IPv6 faces various overheads if the movement of the MN occurs too frequently. In the case of frequent handovers amongst wireless transceivers covering small geographical areas, link-layer mechanisms for link maintenance (i.e. link-layer handoff) might offer faster convergence and fewer overheads than Mobile IP.

Given the current trend of pushing IP closer to the wireless interface in order to deploy a full IP infrastructure, several solutions to this problem are being studied based on IP protocols. A brief overview of these draft proposals is given below.

The Mobile IPv6 protocol relies on binding messages (binding updates, binding acknowledgements, and binding requests) sent between the MN and the HA and CN. This allows to maintain reachability of MNs while they move from subnet to subnet and thus change care-of address (to one whose prefix is advertised in that particular subnet). Binding Updates (BUs) are used to inform HAs and CN of the MN's current address. BUs cause signalling overhead in the radio interface and processing overhead at the home agent and at the corresponding node.

Local Mobility Management (LMM) protocols are designed for environments where mobile hosts change their point of attachment to the network (and thus change care-of address) so frequently that the following undesired effects would occur in a network running only on base Mobile IPv6: signaling overhead, network signaling overhead, processing overhead at the peer nodes, signaling overhead over the air, signaling delay, and packet loss.

With regard to signaling overhead (network signaling overhead, signaling overhead over the air and processing overhead at peer nodes), the network signaling overhead can be minimized in most of the cases by synchronizing binding messages to higher layer payloads (i.e. piggybacking IP signaling to existing payload).

Signaling overhead is also exhibited at the air interface due to multiple BUs (Binding Update messages) across the air interface when there are several outstanding sessions with CNs. In order to avoid triangular routing, Mobile IPv6 MNs should send BUs to each of these CNs. Triangular routing is a well known problem which occurs while the MN is located far away from its home network and is communicating with CN located near the foreign site. Each datagram sent from the CN to the MN travels to HA which then forwards the packet to the MN. Thus the packets are traveling long way instead of the shortest path.

Processing overhead at peer nodes can occur at the Home Agent or at the Correspondent Nodes particularly if the correspondent node is serving a large number of mobile nodes (e.g. streaming server). Since the HA is specifically introduced in the network to perform a mapping and tunneling functionality which forms the basis of Mobile IPv6, the HA should be designed to handle large amounts of signaling. However, CNs might not be willing to dedicate much processing overhead caused by mobility of MNs. It would thus be desirable to make MN's mobility as transparent as possible to CNs without posing potentially tough processing requirements from them (and without reverting back to triangular routing).

Signaling delay may occur across long paths existing between the mobile node and the home agent and any correspondent nodes. In the base Mobile IPv6 the mobile node would need to notify its Home Agent and any correspondent nodes with which it has active bindings. With the introduction of a Localized Mobility Management (LMM) protocol this delay is reduced.

The introduction of an LMM in any future architecture can be seen as an overhead especially if the protocol is complex. The present solutions (Hierarchical Mobile IPv6 (HMIPv6), Mobile IPv6 Regional Registrations (MIPv6RR)) complicate the Mobile IPv6 operation in the following manners:
- introducing the need of extensions to advertisements,
- introducing new or modified binding messages,
- additional node functionality (Gateway Mobility Agent (GMA) / Mobility Anchor Point (MAP), etc),
- need for configurations (some of which are manual configurations, e.g. In MIPv6RR each regional-aware router needs to be manually configured with the IP address of the immediate descendant routers)
- need for security associations amongst those nodes,
- increased functionality in the mobile node etc....

There have also been increasing concerns regarding the size of binding caches inside GMA/MAP (which can be seen mimic the function of the SGSN in GPRS). This also introduces single point of failures in the hierarchy, which is of course undesirable. If a hierarchical agent goes down, the entire edge network is compromised. While this problem can be addressed by replication mechanisms, these mechanisms introduce additional complexity.

The hierarchical-LMMs tend to require even more signaling over the air in terms of:
- extensions to router advertisements (additional 28 bytes for each MAP in the case of HMIPv6, or an additional 24 bytes for each advertised Regional care-of address in MIPv6RR);
- extensions to binding updates in order to perform a regional binding update operation (20 bytes for the previous access router sub-option in MIPv6RR. This is needed in order to determine which router is the crossover router);
- tunneling overhead (an additional 40 bytes for the tunneling IPv6 header for each data packet sent over the air in HMIPv6. Tunneling overhead is overcome in MIPv6RR through the address swapping in the regional forwarding mechanism.).

It should be noted that schemes such as header compression do not overcome the first two overheads mentioned above. Every time a movement takes place, each context need to be reconstructed due to changing care-of address and at least one packet per session is uncompressed. There might be multiple compression sessions even per one CN (VoIP over RTP over UDP, video over RTP over UDP are two different contexts). Transferring or re-starting many contexts also causes processing overhead. Experiments show the restart overhead can be of the order of 6 packets.

The air interface utilization can be reduced by both HMIPv6 and MIPv6RR associated as only one (regional) binding update needs to be sent to the MAP/GMA or crossover router, as compared to the base Mobile IP case in which multiple binding updates need to be sent - one to the Home Agent and one to each correspondent node.

Localized Mobility Management limits signaling to short paths and hence reduces the probability of packet loss.

The signaling delay and packet loss problems can be coped with by the Fast Handovers protocol (or some similar mechanism).

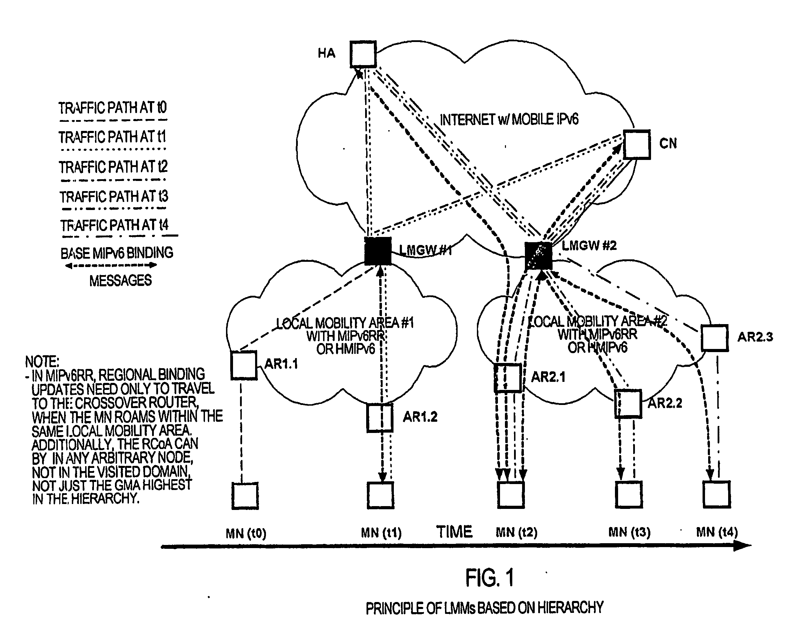

In the light of the problems outlined above several solutions based on different principles were proposed mainly within the MobileIP Work Group (WG) in IETF. Generally, LMMs (formerly known as micro-mobility protocols) try to overcome the above-mentioned overheads associated with the base Mobile IPv6 protocol when mobile nodes change their care-of address (CoA) frequently. Current LMM draft proposals within IETF can be broadly classified as follows:
1) LMMs which are based on hierarchy as shown in Fig. 1. These hierarchy-LMMs are based on extensions to Mobile IP, and currently consist of "Hierarchical Mobile IPv6" (HMIPv6), and "Mobile IPv6 Regional Registrations" (MIPv6RR). These LMMs create a virtual slack in the fast movement of MNs as seen by peer nodes outside the visited domain. This is achieved by using two care-of address; one regional and one local, of which only the latter changes at each change of AR. The area in which a MN is allowed to keep the same regional care-of address is based on extensions to Mobile IPv6 router advertisements sent over the air which delimit domains in which different Regional care-of address could be used.
2) LMMs based on host routes. A typical example of this class of LMMs is Cellular IP. These LMMs also allow for Mobile IPv6 to act as the "macro-mobility" protocol, but they are not based on extensions to Mobile IPv6. MN maintains the same (topologically incorrect) IP address while moving across ARs belonging to the same domain. Reachability of the MN is maintained by creating host routes inside the domain. The major drawback in these proposals is the scalability when routing tables contain a large number of rapidly changing host routes (routing table entries with /128 subnet mask).
3) LMMs based on tunneling across the edge of the network. Currently, there are no proposals in IETF based on this model. A mechanism creating forwarding paths between MN's care-of addresses can improve handoff smothness in Mobile IPv6.

Generally, Mobile IPv6 Regional Registrations introduce a regional and a primary (on-link) CoA. The regional CoA is the CoA as seen from outside the visited domain, and remains the same while the MN remains within a visited domain (GMA). The primary CoA allows to keep track of the MN's regional movements, but its change is transparent beyond the Gateway Mobility Agent (GMA).

Hierarchical Mobile IPv6 reduces mobility signalling with external networks by employing a local hierarchical structure based on the introduction of a new agent called Mobility Anchor Point (MAP). This agent acts essentially as a local HA for a MN it is serving. The domain boundaries of a MAP are defined by the ARs advertising the MAP information to the attached MNs. A MAP can have two different modes. In "Basic mode" a MN forms a Regional-CoA (RCoA) on the MAP's subnet and an on-link CoA (LCoA). The packet delivery to the MN is achieved by interception and encapsulation at the MAP. In "Extended mode" a MN may use a MAP's address as an alternate-CoA. The packet delivery is achieved by decapsulation and re-encapsulation of the packets at the MAP.

GMA (used in Mobile IPv6 Regional Registrations) and MAP (used in Hierarchical Mobile IPv6) are nodes which contain the mapping between the regional care-of address and local care-of address, and take care of the tunneling or forwarding between those addresses. MAP can be implemented by a router in a visited network and GMA by software module in the routers.

The base Mobile IPv6 uses the previous router notification which binds the new care-of address with the previous care-of address at the old Access Router as if the latter were a home address. This causes encapsulation of traffic destined to the old care-of address to the new care-of address as the outer encapsulation destination address. This forwarding tunnel is normally set up only after the MN arrives at the new link (this mechanism is further optimized in Fast Handovers for Mobile IPv6). However this does not solve the end-to-end signaling overhead which was described in the previous section, but merely solves the delay and packet loss problem (i.e. the mobile user will be satisfied with the service but the network operator will still be facing network overhead due to frequent end-to-end signaling).

Cellular IPv6 and HAWAII propose mechanisms based on host route (/128 bit netmask) entries inside routing tables. It has been widely accepted that these proposals face severe scalability problems due to the instability caused by a large number of fast changing routing table entries. It should also be noted that HAWAII is specific to Mobile IPv4.

In "Threshold-Based Registration (TBR) in Mobile IPv6" (L. Yang et al., "Treshold-Based Registration in Mobile IPv6", IFIP-TC/6 European Commission NETWORKING 2000 International Workshop, MWCN 2000, Paris, France, May 2000), the MN establishes forwarding paths from its immediate previous care-of address. Only after a fixed number of immediate forwarding steps, the MN establishes direct forwarding paths from the primary care-of address (at the anchor home agent), and only after a number of direct forwarding steps from its primary care-of address the MN will register a new primary care-of address at its HA. The aim of this mechanism is to improve handoff smoothness in Mobile IPv6.

Independent of the local mobility mechanisms listed above, Fast Handovers for Mobile IPv6 enables a mobile node to configure a new care-of address before it moves to a new access router, such that it can use this new care of address immediately after connection with the new access router. Fast Handovers additionally enables the setup of a temporary forwarding path between the old access router and the new access router. Thus, Fast Handovers may relieve the delay and associated packet loss problems described above. Fast Handovers is not aiming at overcoming the signaling overhead problem.

The document "draft-ietf-mobileip-fast-mipv6-03.txt" describes Mobile IPv6 which enables a Mobile Node, MN, to maintain its connectivity to the Internet when moving from an Access Router, AR, to another. This process is referred to as handover. According to this document, whenever the MN can, it should obtain a new Care-of address, CoA, and send Binding Updates to update the binding information with new CoA information to correspondent nodes and the Home Agent as specified in Mobile IPv6. If the MN is unable to send Binding updates to the correspondent nodes/Home Agent (for various reasons, one of the reasons being that of not being able to obtain a new CoA) and the MN has to handoff, three parties are involved in this handover (this handoff is referred to as three party handoff). The inability to perform MIP registration may result from either a specific decision by the MN due to an ongoing real time media stream, or it may result from rapid movement between old AR, oAR, and new AR, nAR, that does not allow enough time for the registration to complete. Another method requires an L2 trigger at oAR prior to L2 handover start or an L2 trigger prior to L2 handover completion at nAR, and an L2 trigger at oAR, nAR, and MN immediately upon completion of L2 handover.

The mechanism presented by the invention augments the operation so that, among others, it solves or at least reduces the overhead problem.

The present invention provides a method as defined in claim 1, or any one of the dependent claims 2 to 11. The present invention further provides a system as defined in claim 12, or any one of the dependent claims 13 to 20.

The decision whether the first Access Router (AR1) should act as an Anchor Access Router may be made by the Mobile Node, by the Network, or by an entity in access network. The entity in the access network is preferably Access Router. Access Router functionality may be implemented for example in the Base Station or GPRS Support Node. The Access Router can be also a separate entity.

The maximum number of handovers for which the same Anchor Access Router is kept is preferably restricted to a pre-defined upper limit.

Some examples of the criterias mentioned in claims 2, 13: The traffic activity between the node (CN1, CN2, ...CNn) and the Mobile Node (MN) means that the decision is made in order to avoid unnecessary signaling or traffic between the MN and peer nodes. It can mean also that there is a cost function between the signaling between peer nodes and access routers, and the signaling between different access routers.

Protocol Layers 1 and 2 means the protocol layers under IP Layer, for example air interface protocols (including radio resource control) and physical layer. More generally, the layers may be any "underlying layers" which means not only "protocol layers 1 and 2" (fo example GSM/CDMA including radio resource control and physical layer). The "underlying layers" mean basically anything below IP layer. It can be radio resource control protocol and L1 but if compared to GSM/WCDMA it can contain protocol such as SM, GMM, etc.

Examples of radio access network are CDMA or TDMA based radio access network technologies.

The above functionality can be extended even after the MN has moved to ARn via two optional mechanisms, in the first of which a chain of tunnels between the Anchor Access Router and the current Access Router is created, and in the second option a single tunnel between the Anchor Access Router and the current Access Router is created. The decision on whether to send BUs is preferably always based on the criteria described in claims 1, 2 and on the number of times the CoA was changed without notifying the HA and CNs (in order to avoid excessively long forwarding paths).

An Anchor Access Router (AAR) is the router responsible for the Mobile Node's (MN) Care-of Address (CoA) which is visible to the Home Agent (HA) and Correspondent Nodes (CN) while the MN is attached to some other Access Router(AR) other than the AAR at radio layer (and at IP layer via a second CoA which is not visible to the HA and CNs). There may be provided many HAs as well as CNs that have ongoing sessions with MN.

In more detail, when the Mobile Node has moved and selected a new Access Router as Anchor Access Router, a Binding Update message can always be sent to the previous Access Router, the decision on whether to send Binding Update messages being always based on the criteria mentioned in claims 1, 2, and/or on the number of times a Care-of-Address (CoA) was changed without notifying a peer node. Alternatively, when the Mobile Node has moved and selected a new Access Router as Anchor Access Router, a Binding Update message can always be sent to the Anchor Access Router, the decision again being based on the criteria just mentioned.

The invention decreases the amount of Mobile IP related signaling between (potentially fast moving) Mobile Nodes (MNs) and their peer agents (HA, CNs).
In addition to the decreasing of signaling between Access Routers and the Peer Nodes the invention in one aspect also decreases the signaling in the air interface while the MN is in idle state (because MN does not have to send the BUs over the air, it is enough that the RRA (RAN Registration Area, this is like UTRAN Registration Area) updates are sent).

In a typical radio access network, Registration Area (RRA) is a set of access routers (and IP BTS if AR and IP BTS are combined) which belong to same RRA. RRA is a L2 area concept and is not seen to the IP level. Adjacent RRAs may overlap with each other.

In accordance with one of preferred implementation of the invention, a method and mechanism is provided for reducing the number of binding updates sent by a fast moving MN to its HA and CNs to a guaranteed maximum frequency. The processing overhead at the HA and CNs, and the signaling overhead over the air is thus minimized. A framework for a paging mechanism for reducing signaling overhead caused by Mobile IP to keep track of idle MNs is also presented. The signaling delay and packet loss may also be reduced. The minimization of signaling delay and packet loss may also be left to the Fast Handovers for Mobile IPv6 mechanism as e.g. specified in the respective Internet Draft of IETF (Internet Engineering Task Force).

The invention introduces a method and mechanism based on Access Router (AR) anchoring built on augmentations to the Fast Handovers mechanism. Different heuristics are presented on which the Anchor Access Router (AAR) could be relocated. Two options are described which can be used to avoid multiple levels of re-encapsulation which could possibly be caused by multiple forwarding.

In accordance with a further aspect of the invention, an associated method and mechanism is provided to support paging when a MN is in idle mode, thus limiting unnecessary network overhead used for tracking idle MNs and also increasing the MN's battery lifetime.

Since the method and mechanism according to preferred implementation of the invention functions at the IP layer, it is also suitable for localized mobility management across homogeneous media as well as for mobility across heterogeneous media (e.g., from one AR with WCDMA-based Access Point/s to an AR with WLAN based Access Point/s).

Advantages of the structure and method according to the invention over hierarchical-LMMs are the following:
- no need for configurations (in the current hierarchical-LMM drafts, e.g. in MIPv6RR, each regional aware router in the hierarchy needs to be configured with the addresses of the direct descendants);
- no need for extensions to router advertisements which take up radio resources;
- no need for additional binding updates (or extensions to binding updates) over the air (additional to those required by Mobile IPv6 and Fast Handovers);
- all the functionality needed to limit the propagation of BUs to peer nodes can be provided in the access routers. The mechanism is transparent to the rest of the internet, thus all routers in the network can be standard IP routers;
- there is no single root node at the top of the hierarchy which acts as the GMA/MAP. The tunnel endpoint in the flat-LMM case is distributed across different ARs for different MNs. This leads to better scalability;
- no need to set up a second care-of address (regional CoA, Care of Address) (in HMIPv6 this is explicit - a MN has to set up a unique regional CoA, with all the associated signaling. In MIPv6RR this is not such a problem since all MNs under the same GMA use the same regional CoA);
- the flat-localized mobility management provided by the invention requires only very minor changes to Mobile IPv6 and Fast Handovers for Mobile IPv6 (no need for a completely new protocol);
- the flat-localized mobility management provided by the invention is not dependent on domains advertised through extensions to Mobile IPv6 Router Advertisements, but on timers which limit the frequency at which a MN is allowed to send BUs to its HA and CNs. This feature can be used to ensure that BUs are not received at the HA and CNs at a frequency higher than a certain threshold. This benefit is not possible with hierachical LMMs based on domain advertisements;
- simplified security associations between network elements and mobile node. The MN can either operate as in the base Mobile IPv6, or it can send BUs to previous access routers, with which it was already communicating before. Thus, there is no need to introduce and rely on complex key districution mechanisms;
- less states are required in the Local Mobility Agents since states are only required for fast moving MNs. States for slow moving MNs are mainained only at the HA and/or CNs.

### BRIEF DESCRIPTION OF THE DRAWINGS

Fig. 1 illustrates a basic structure of a communication system and outlines the basic operation of LMMs based on hierarchy,
Fig. 2 shows an operation of a hypothetic network using base Mobile IP and Fast Handovers (with no LMM),
Fig. 3 shows the operational principle of of an embodiment according to the invention of a method and system incorporating the proposed flat-LMM mechanism (option 2),
Figs. 4 and 5 show signaling diagrams for flat-LMM mechanism of embodiments for option 1 and option 2 respectively, according to the invention,
Fig. 6 is related to IP termination to the access router (i.e. IP BTS), 2 level tracking in L2 and IP,
Fig. 7 illustrates a preferred embodiment of the invention, and shows the overall principle of disassociation of L2 from the L3,
Fig. 8 illustrates the disassociation of layer L2 from layer L3 in a more detailed view,
Fig. 9 shows the functioning of an embodiment and illustrates the signaling for RRA updating in case the user crosses the RRA boundary,
Fig. 10 shows the functioning of an embodiment and illustrates the signaling for subsequent RRA updating, and
Figs. 11, 12 show the IP and L2 tracking in 2 levels implemented in embodiments of the invention.

### DETAILED DESCRIPTION OF EMBODIMENTS OF THE INVENTION

Generally, the invention regards a mechanism to overcome the problems associated with Mobile IP under frequent change of care-of address by the Mobile Node (MN). In the examples below Mobile IPv6 is used but it should be noted that the invention may be implemented as well with other protocols like Mobile IPv4. Aspects of the invention are shortly: while the MN is changing cell it creates the new care-of address (CoA) as in standard Mobile IPv6 but it does not send the binding updates (BU) to Home Agent (HA) or to Correspondent Node (CN). Instead it sends BU to the old Access Router (AR) or it does not send a BU at all (additional to the fast-BU between the new- and old- AR) in case of Fast Handovers (Internet Draft). The invention introduces a mechanism based on Access Router (AR) anchoring built on augmentations to the Fast Handovers mechanism (Internet draft). Different heuristics are presented on which the Anchor Access Router (AAR) could be relocated. Two options are described which could be used to avoid multiple levels of re-encapsulation which could be caused by multiple forwarding.

This invention also introduces an associated mechanism to support paging when a MN is in idle mode, thus limiting unnecessary network overhead used for tracking idle MNs and also increasing the lifetime of MN's battery. An "A" flag in the Mobile IPv6 router advertisement could be added in the currently unspecified bits to notify the mobile nodes that this particular Access Router supports anchoring. Then MN may decide to send the BUs to the Anchor AR while it changes the access routers. The MN may decide to relocate its anchor Access Router, based on layer 2 (L2) location areas (eg, URA (registration area in the Universal Mobile Telecommunications System (UMTS))), or based on the number of access router hops, or depending on the interval since its last change of care-of address for example.

The described embodiments of the invention are based on a mechanism for creating forwarding paths between MN's care-of addresses and thereby improving handoff smoothness in Mobile IPv6, and provide a solution to the problem of limiting the BUs which need to propagate to the HA and CNs. Fast and smooth handoff problems can be handled according to the solution proposed in IETF, i.e. "Fast Handovers for Mobile IPv6".

With the flat-LMM concept provided in the embodiments, there is no node at the root of the hierarchy which acts as a GMA/MAP. The operation of the Anchor Access Router (AAR) in the flat-LMM is very simple and can thus be implemented in all Access Routers. The operation of the AAR is simply the same basic operation of a standard AR with an additional embedded MIPv6 binding cache which enables the AAR to receive BUs from the MN and forward packets to the MN even while the MN is no longer within the subnet formed by that AR.

If the concept of using Regional Forwarding is implemented to prevent multiple levels of re-encapsulation, then the ARs also need to implement Regional Forwarding. It should be noted that the Regional Forwarding mechanism is not required if each Access Router decapsulates the tunneled packets before re-encapsulating them.

Fig. 1 outlines the basic operation of LMMs based on hierarchy. Notice that while the MN roams within the same hierarchical domain (with the same LMGW as root) the MN only sends regional binding updates. When the MN changes domain it sends BUs to its HA and CNs. In the figure the Local Mobility Gateway (LMGW) is a node which renders the frequent change of care-of address of fast moving mobile nodes transparent to nodes topologically farther from the mobile node (s.a. the Home Agent). In order to minimize signaling latencies a LMGW should be as topologically close to the mobile node as possible. In the embodiments of the invention the LMGW resides in the AAR and is dynamically assigned on a case-by-case basis (i.e. slow moving MNs do not use a LMGW). In Hierarchical Mobile IPv6 the LMGW is equivalent to the MAP, and in Mobile IPv6 Regional Registrations the LMGW is equivalent to the GMA.

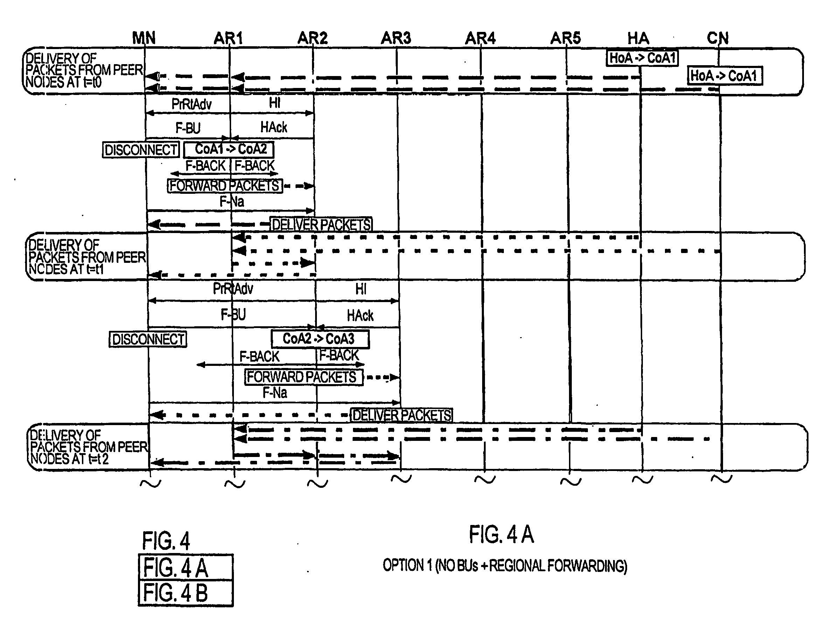

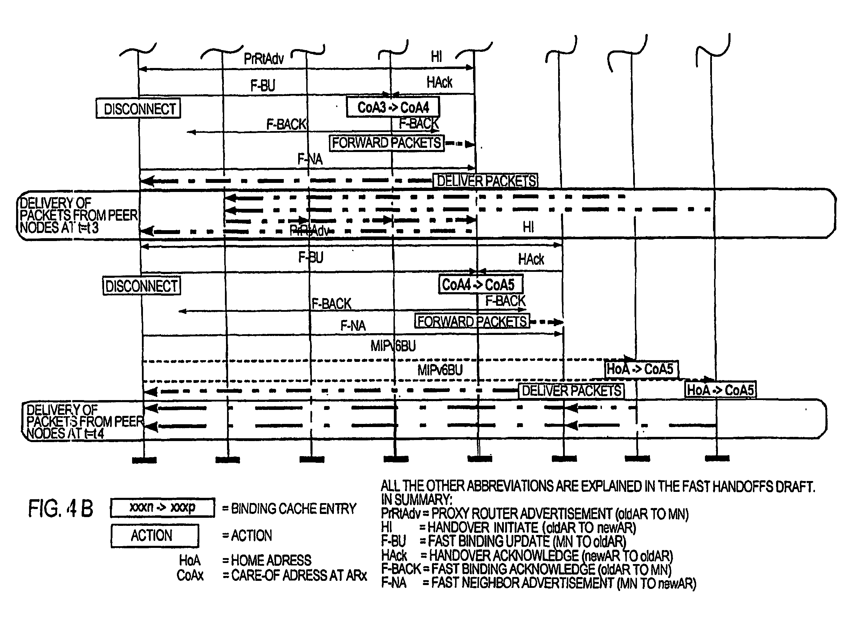

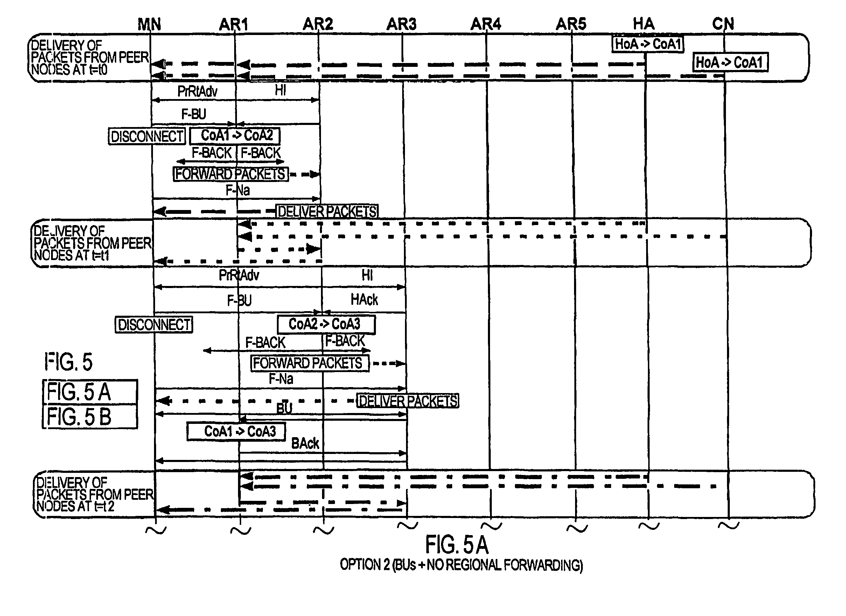

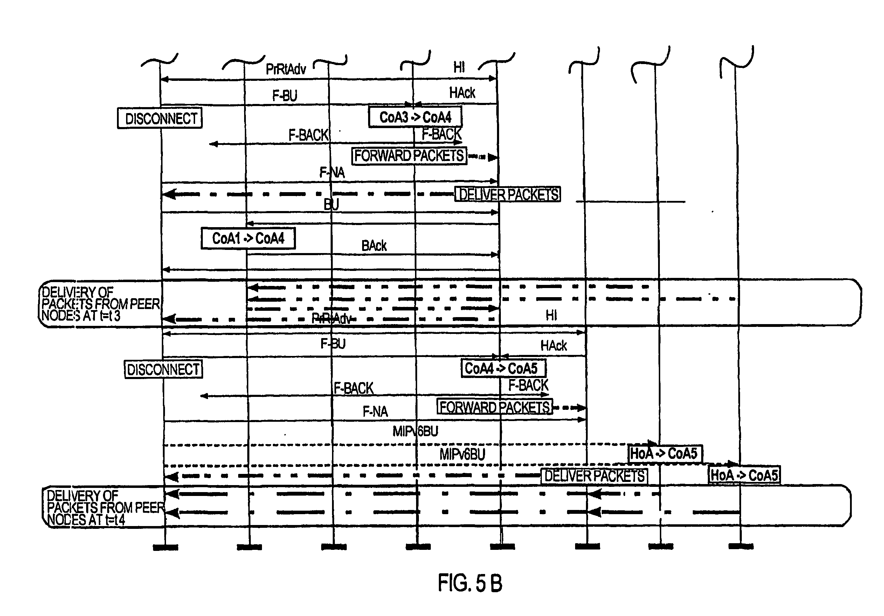

In all drawings, the same MN is shown several times, each at different subsequent time points t1 to t4, as also indicated by an arrow "TIME" in Figs. 1 to 3. Figs. 4, 5 represent the time axis from t=t0 to t=t4 in a downward direction.

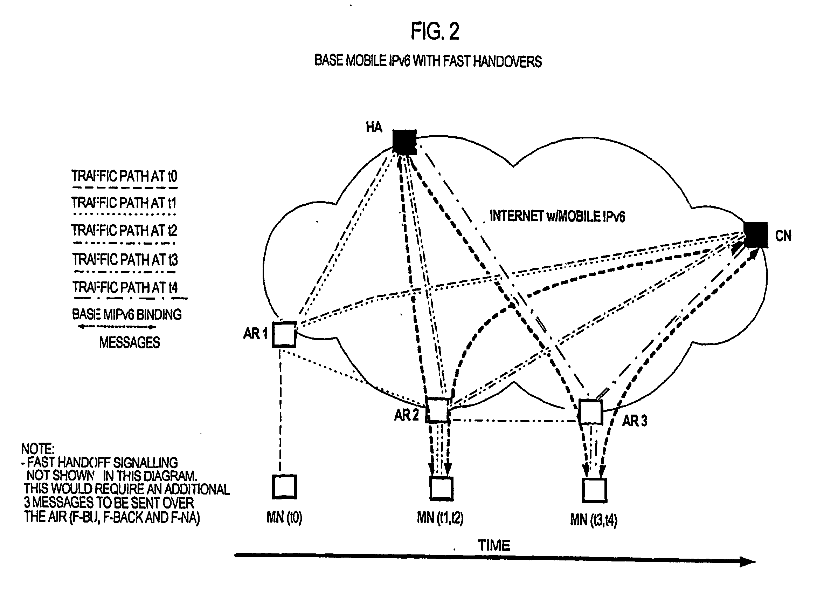

Fig. 2 shows the operation of a hypothetic network using base Mobile IP and Fast Handovers (with no LMM). Note that the MN needs to trigger MIPv6 signaling with the HA and CN at each change of AR.

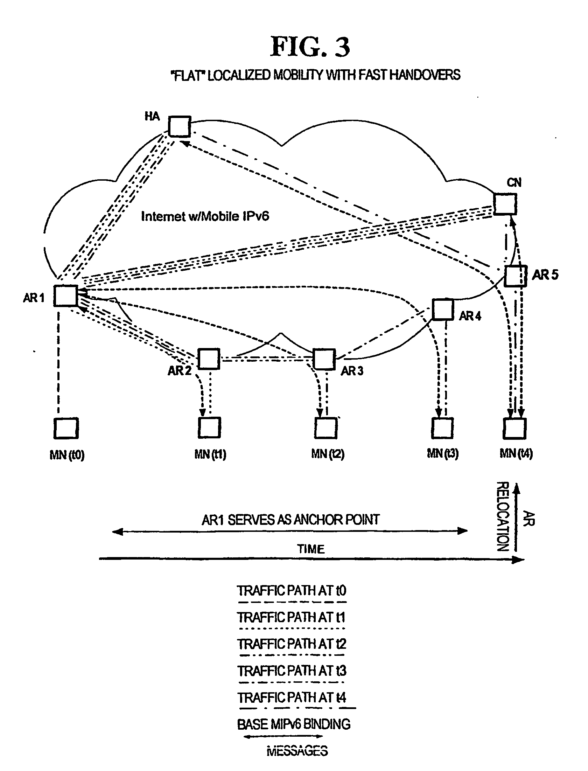

Fig. 3 shows the operational principle of preferred embodiments of the invention which include the proposed flat-LMM mechanism (option 2, i.e. BUs but no Regional Forwarding). A detailed description of the mechanism is given below. Note that the MN is required to trigger Mobile IPv6 signaling only when the Anchor Access Router is relocated.

Figures 4 and 5 show the signaling diagram for the flat-LMM mechanism, described below, for option 1 and option 2 respectively.

As discussed above, Fast Handovers for Mobile IPv6 alleviates delay and packet loss problems presented above but currently does not tackle the signaling overhead problem. This can be seen in Fig. 2. End-to-end Mobile IPv6 signaling has to take place at each change of Access Router. Although in most cases the overhead associated with this signaling can be reduced by synchronizing the binding messages to higher layer payloads, this is in some cases not feasible. Even if all binding messages can be synchronized to higher layer payload, some mechanism would still be needed to limit the processing overhead at correspondent nodes. Thus, it is still desirable to limit this end-to-end signaling, particularly when the MN changes Access Routers very frequently.

The invention thus proposes, according to one aspect, a mechanism for limiting the end-to-end signaling based on anchoring of Access Routers (see Fig. 3). A MN is initially attached to AR1 (time = t0). Subsequently (time = t1) it hands-over to a new cell which is controlled by a new Access Router (AR2). The MN proceeds by forming its new care-of address as in standard Mobile IPv6. The MN however makes a decision that instead of sending BUs to its peer nodes (HA, CNs) it will send a BU to its previous Access Router, or no BU at all (additional to the fast-BU) in the case of Fast Handovers. In the latter case, the old Access Router will learn the new MN's care-of address through Fast-BU specified in IETF proposal. The only difference proposed by the invention is that the MN will not subsequently send a BU to its peer-nodes (HA, CNs). An "A" flag in the Mobile IPv6 router advertisement could be added in the currently unspecified bits to notify the mobile nodes that this particular Access Router supports anchoring.

The MN may decide to relocate its anchor Access Router, based on L2 location areas (eg, URA), or based on the number of access router hops, or depending on the interval since its last change of care-of address for example. This is discussed in more detail below.

One of the aims of the flat-LMM concept is to minimize the propagation of BUs to HA and CNs. The basic algorithms outlined below are enough to serve the purpose. The problem of minimizing latency and packet loss may be handled by the Fast Handovers mechanism.

In the following, details for limiting the frequency of BUs sent to HA and CNs will be discussed. The following basic algorithms can be used as a basis for the decision of when to use Acess Router Anchoring and when to revert back to normal Fast Handovers + Mobile IPv6 operation (i.e. sending BUs to HA and CNs):
- maintaining a timer (t) to measure the interval since the last delivery of a BU to HA/CN
   if t > threshold
   normal Fast Handover + MIPv6 operation
   else
   normal Fast Handover + MIPv6 operation but without sending BU (or send BU to AAR, depending on which option (see below) is selected
   end
AND/OR
- maintaining a counter (c) in the MN to keep track of the number of L3 handovers for which the same AAR was kept. If the AAR is too far away (in terms of number of L3 handovers) then relocate the AAR.
AND/OR
- the MN may also take into consideration the number of CNs with which it has ongoing sessisions when making the decision about whether or not to use the AAR. If the number of CNs is above a certain threshold (n), then in order to save air interface resources (mainly), the MN will decide to use the AAR, in which case only one BU will be sent.

In practice, a combination of the above methods/algorithms will give even better results. Selection of the threshold values and their corresponding weightings, leading to the most optimal results can be found empirically through implementations and/or simulations.

At some stage, e.g. when reaching a threshold set for the selected or more of the above mentioned algorithm(s), the MN may decide that it is time to relocate its Access Router. In this case it will follow standard Mobile IPv6 Fast Handover Procedure, and will send a Binding Update to its peer nodes (HA and CNs).

In the following, options for limiting multiple levels of re-encapsulation are discussed which represent optional features of the invention (this problem could also be solved if the Access Routers decapsulate the tunneled packets before re-encapsulating them).

Two alternative mechanisms are proposed to avoid this problem, i.e. to limit multiple levels of re-encapsulation.

The first option is to apply address swapping as used e.g. in Mobile IP Regional Forwarding (J.T. Malinen, C.E. Perkins, "Mobile IP Regional Forwarding", Internet Draft).

The second alternative consists in that the MN keeps record of the address of the anchor Access Router, and uses this address as a primary Anchor Access Router (i.e. the MN always signals its movement to this Access Router). At time = t2, the MN hands-over to a cell controlled by AR3. The MN still chooses to use AR1 as its anchor point. Thus, during the Fast Handoff mechanism it sends its Fast-BU to AR1 instead of AR2. This way, only one extra tunneling header will be required (similar to HMIPv6). If an address swapping mechanism such as that proposed in J.T. Malinen, C.E. Perkins, "Mobile IP Regional Forwarding", Internet Draft, is used, then no additional tunneling overhead will occur.

Fig. 4 illustrates the functioning of an embodiment incorporating a function according to option 1. The signaling and message flow (data flow) as well as the meaning of the actions shown in Fig. 4 is self-explanatory from the arrows and inscriptions used in Fig. 4. Fig. 4 thus represents full disclosure of the details of this embodiment of the invention.

The functioning of Fig. 5 embodiment corresponds to the basic The functioning corresponds to the basic Fast Handover + MIPv6 operation, with the following modifications:
- ARs advertise the support of flat-LMM with an "A" flag which replaces one of the currently unused bits in the MIPv6 router advertisements;
- ARs implement Regional Forwarding to avoid multiple levels of re-encapsulation;
- MN implements a heuristic algorithm (eg. as given above) to determine when to send BUs to HA and CNs (in the example embodiment of Fig. 4 this happens when MN moves to AR5).

Fig. 5 illustrates the functioning of an embodiment incorporating a function according to option 2. The signaling and message flow (data flow) as well as the meaning of the actions shown in Fig. 5 is self-explanatory from the arrows and inscriptions used in Fig. 5. Fig. 5 thus represents full disclosure of the details of this embodiment of the invention.

The functioning of Fig. 5 embodiment corresponds to the basic Fast Handover + MIPv6 operation, with the following modifications:
- ARs advertise the support of flat-LMM with an "A" flag which replaces one of the currently unused bits in the MIPv6 router advertisements;
- MN records the address of the AAR and sends its BUs to that address as opposed to the HA/CNs;
- In this case only 1 extra encapsulation occurs (at the AAR). If this is an issue then the ARs can implement the address swapping mechanism used in Regional Forwarding (without need for a full Regional Forwarding implementation, since there is no need for the mechanism that sets up (or updates) the binding cache (hop-by-hop) in RegFwd);
- In this case the AAR can refuse to act as an anchor AR by sending a Negative BAck, with a new error message (eg "AR not willing to server as Anchor"). In that case the MN will revert back to standard Fast Handover + MIPv6 operation, i.e. sending a BU to the HA/CNs.

In the embodiment of Fig. 5 implementing "Option 2" no multiple levels of address swapping is needed. In MIPv6RR multiple levels of address swapping is the only option.

The operation in Idle mode will be described next. The signaling overhead in support of the Mobile IPv6 mobility management will grow linearly with the number of MNs in the network. The vast majority of wireless IP subscribers will not be actively communicating most of the time. Rather, MNs will be in an idle state (power saving), i.e. passively connected to the network. As a result, it will be sufficient for the network to know the approximate location of idle MNs. The exact location of the MNs only becomes important when data needs to be forwarded to them, in which case the network protocols need to be able to efficiently search and find these users in a scalable and timely manner. This process is not new in cellular networks and is referred to as paging.

The invention proposes to extend the above presented basic structure in order to incorporate paging mechanism which ensures to achieve the above mentioned advantages. L2 Access Points attached to Access Routers are organized in Registration Areas (RAs) which are similar to UTRAN Registration areas (URA) in UTRAN and GERAN Registration Areas (GRA) in GERAN. The identity of the RRA is advertised over broadcast channel by each Access Point. In order to integrate radio technologies which do not make use of such L2 areas (eg WLAN) in this mechanism, these registration areas can be IP based (but still sent over broadcast channels s.t. the MN can listen to them when idle). If the MN is in idle state, it is not required to send any binding updates (either to the peer nodes or to the AAR) as long as it stays within the same RA as its AAR. If the MN was not using an AAR before going idle, then the last AR where the MN was last seen active takes its role. When an idle MN changes RAs it sends BUs as in standard MIPv6, i.e. to its HA. The HA thus always knows the location of the MN to the acuracy of the RA.

If a new CN initiates a new session towards the MN the traffic will first reach the HA, where it will be diverted towards the last registered care-of address which should point to an Access Router in the MNs current RA. When the AR receives such packet/s, after determining that the MN does not have a radio bearer at any of the Access Points attached to it, the AR will initiate paging across the whole RA. In cellular systems that already support paging (WCDMA, EDGE, etc...) this could be a L2 paging message. In other technologies which do not currently support paging at L2, some IP paging message can be defined. On reception of such a paging message the MN initiates a radio bearer establishment and sends a BU to the AAR so that packets can be forwarded to the MN's current AR. Subsequent to this, the MN preferably sends BUs to the HA and CNs in order to establish optimal routing paths.

The invention has impacts on the architectures selected for full-IP architectures based on Mobile IP (IPv4 or IPv6). In the described embodiments all the required functionality resides in the Access Routers. There is no need for any specialized nodes (GMA/MAP etc...) in the architecture.

Since the mechanism presented in this embodiments functions at the IP layer, it is just as suitable for localized mobility management across homogeneous media as it is for mobility across heterogeneous media (eg, from one AR with WCDMA-based Acess Point/s to an AR with WLAN based Access Point/s).

The intelligence needed in the MN is not much more complicated than a simple operation for implementing the above timer or counter function.

The flat-LMM mechanism is not based on host routes. It is instead based on binding caches. The difference from the above is that binding cache entries are not propagated by routing protocols. Thus there are no instability problems. Regarding the number of entries in each binding cache, in the flat-LMM case there are less entries/cache as compared to hierarchical-LMMs since there is no root node at the top of the hierarchy which maintains all the address mappings for the MNs in that domain. The binding caches are distributed across the ARs and thus more scalable.

The embodiments of the invention shown in the drawings and described above as well as in the following, relate to area where the mobile network design is based on the IP mobility mechanisms, e.g. Mobile IPv6. The main access technologies (Layer 2 protocols) which are considered in the following text are GSM and WCDMA.

The user IP is terminated to the access router (the text uses term IP BTS which is a combination of the AR and BTS functionality) (contrary to the current GPRS where the user IP is terminated to the GGSN) in the network side. This means that IP packets to the user are always routed to the access router. In some case there exists already L2 resources (i.e. radio resources for radio bearers) for sending the data over the air. Typical example of this is an active data transmission.

Note that the access router and base station (BTS) may be in different network entities.

However, in some cases there may not be L2 resources available and also it may be that the terminal location is only known in some L2 location management function. L2 location management may be based on updating the location information to the network where the reported area is RRA (RAN Registration Area, which is like UTRAN Registration Area in WCDMA. Therefore the IP BTS must page the user before in order to locate the user after which the IP BTS may allocate resources for the user in order the data can be sent to the user over the air.

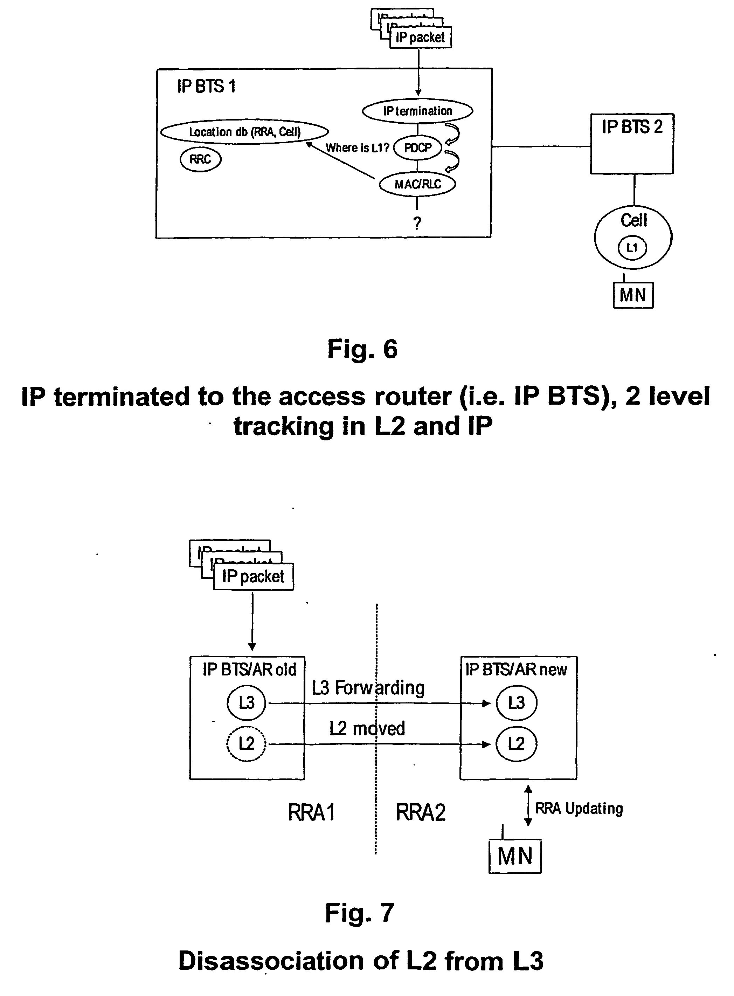

Fig. 6 is related to IP terminated to the access router (i.e. IP BTS), 2 level tracking in L2 and IP, and shows a case where the user starts to receive IP packets from the network. The state information (e.g. Packet Data Convergence Protocol (PDCP), Radio Link Control / Media Access Control (RLC/MAC), security and location) of the user (MN) is maintained in the IP BTS 1 while the user is under IP BTS 2. In this example also the Radio Resource Control (RRC) is maintained in IP BTS
1. The question mark in the figure 6 shows that in this example the IP BTS 1 does not know the physical location (L1 information) of the MN. The user needs to be paged from the RRA and when the MN of the user responds to the paging the handover needs to be executed to the IP BTS 2.

When the terminal enters new RRA area it updates its location to the network (RRA Updating), i.e. the location database "Location db" in the IP BTS 1. The IP BTS may contain the location information of the certain area, i.e. certain RRAs. The user may enter regions for which the location information is stored in another database in another IP BTS than the one where the location information of the user was stored before the user entered the new region.

In this case, the (L2) information regarding the user is moved to the new IP BTS as shown in Fig. 7. In the IP level the change of the IP BTS typically means the change of the CoA of the user. Therefore, the user needs in addition to the RRA update send the BUs to all CNs.

As the sending BUs to CNs increases the signaling load over the air it is in some cases useful to allow a disassociation of L2 from L3. This means that the L2 context of the user is moved to the new IP BTS while on the L3 level the user is still in the old IP BTS. In order to route the IP packets correctly to the user, the old IP BTS updates the new forwarding IP address where to forward the IP packets coming to the CoA in the old IP BTS ("L3 Forwarding" of Fig. 7).

Fig. 7 illustrates the disassociation of the L2 from L3, and shows the overall principle what is meant by the disassociation of L2 from the L3. This embodiment of Fig. 7 is a preferred embodiment of the invention.

The vertical line of Fig. 7 symbolizes the border between RRA1 and RRA2.

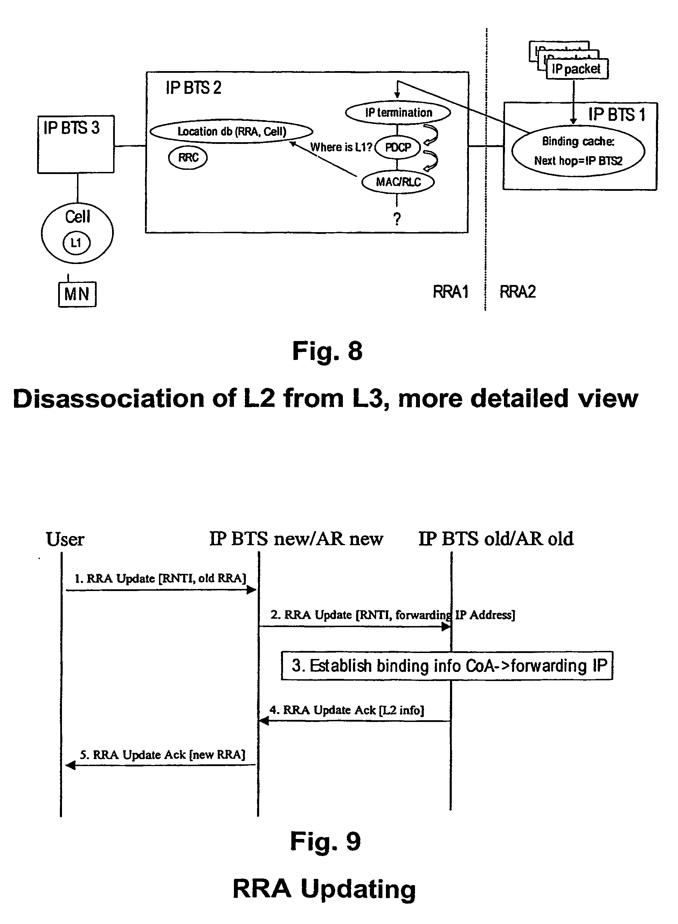

Fig. 8 illustrates the disassociation of layer L2 from layer L3 in a more detailed view. In this case the user MN is attached to IP BTS3 and receives IP packets via IP BTS 1 and IP BTS 2. The Binding cache of BTS 1 includes the information "Next hop=IP BTS 2".

Fig. 9 shows the signaling for RRA updating in case the user crosses the RRA boundary. The user updates its new RRA location to the network containing the Radio Network Temporary Identity (RNTI, this is L2 identity used for the user) and old RRA location (message "1. RRA Update [RNTI, old RRA]" sent from User to IP BTS new/AR new). The new IP BTS allocates an IP address where it is ready to receive forwarded IP packets tunneled from the old IP BTS. The new IP BTS IP sends message "2. RRA Update [RNTI, forwarding IP Address]" to BTS old/AR old. Note that the IP address can be allocated later from the new IP BTS/AR new by making an additional roundtrip between the old and new IP BTS/AR.

The old IP BTS makes binding from the CoA to the new forwarding address (3. Establish binding info CoA -> forwarding IP]". When the old IP BTS receives packets sent to the user to the CoA it tunnels the packets to the new forwarding IP address.

When the old IP BTS receives the RRA Update it sends the L2 information, e.g. radio bearer (RLC/MAC), terminal capability, security parameters and header compression info, to the new IP BTS ("4. RRA Update Ack [L2 info]").

It is a possibility that there is no L3 information forwarded to the new IP BTS at this point. It is also possible to forward some L3 level information e.g. QoS information (Differentiated Services Code Point, DSCP) and security information.

The new IP BTS acknowledges the RRA updating to the user ("5. RRA Update Ack [new RRA]").

From the L2 point of view the user is now in the new RRA while in the L3 the user still has the old CoA in the old IP BTS.

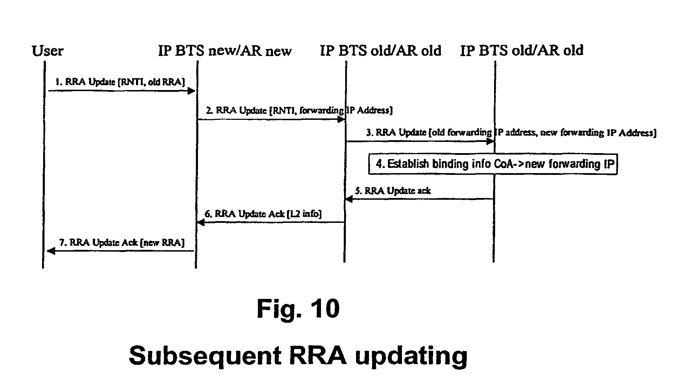

Fig. 10 shows the subsequent RRA updating case which occurs when the user changes RRA while L3 and L2 are already separated in the previous RRA updating (see Fig. 9).

The user updates its new RRA location to the network by sending RRA Update message 1 containing the Radio Network Temporary Identity (RNTI) and old RRA location. The new IP BTS allocates an IP address where it is ready to receive forwarded IP packets tunneled from the old IP BTS, and sends RRA Update message 2 to the old IP BTS indicating RNTI and Forwarding IP address. Note that the IP address can be allocated later from the new IP BTS/AR new by making an additional roundtrip between the old and new IP BTS/AR.

The old IP BTS updates the old forwarding IP address to the new forwarding IP address, and sends RRA Update message 3 to the other old IP BTS which forwards the IP packets for the user. The latter IP BTS makes binding from the CoA to the new forwarding address (event 4). When the forwarding IP BTS receives packets sent to the user to the CoA it tunnels the packets to the new forwarding IP address.

When the old IP BTS receives the RRA Update Ack (message 5) it sends the L2 information, i.e. radio bearer (RLC/MAC), terminal capability, security parameters and header compression info, to the new IP BTS (message 6). It is possible that there is any L3 information forwarded to the new IP BTS at this point. It is further possible and beneficial to forward e.g. QoS information (DSCPs) and security information.

The new IP BTS acknowledges the RRA updating to the user (message 7).

From the L2 point of view the user is now in the new RRA while in the L3 the user still has the old CoA in the forwarding IP BTS.

Alternative to the mechanism presented in the Figure 10 is that when the new IP BTS allocates an IP address where it is ready to receive forwarded IP packets tunneled from the old IP BTS, it sends RRA Update message 2 to the old IP BTS indicating RNTI and Forwarding IP address. The old IP BTS stores the new forwarding IP address, and sends RRA Update Ack message back to the new IP BTS. In this way the IP packet is routed via two old IP BTS/AR to the new IP BTS/AR.

The invention provides a new network architecture design.

The proposed solution combines current GSM and WCDMA radio concept with the MIPv6 concept.

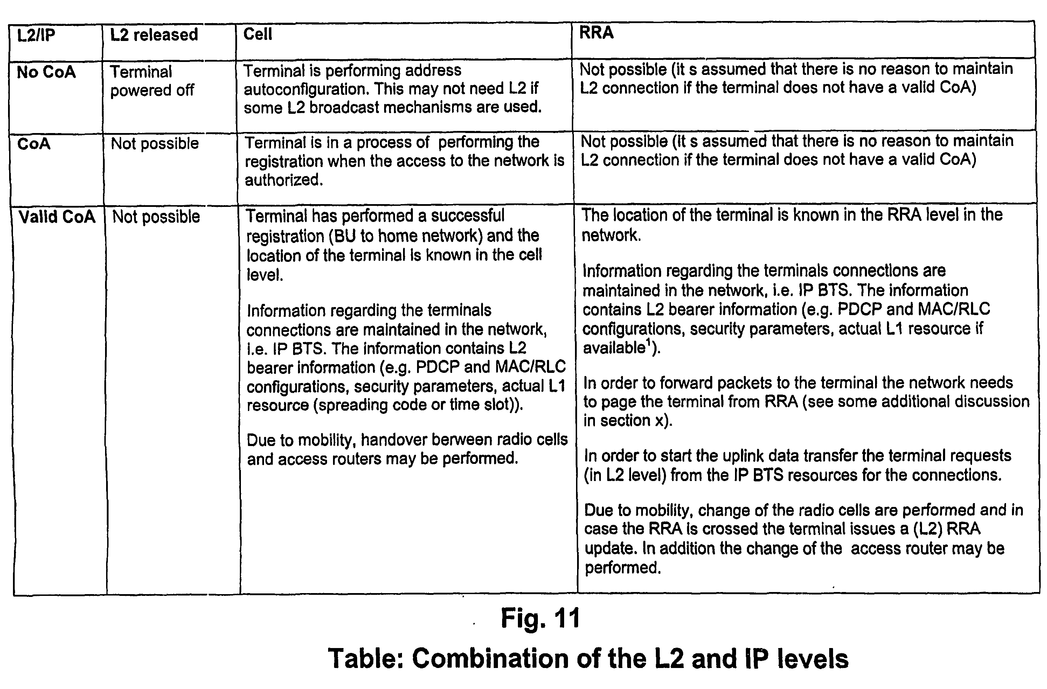

Fig. 11 shows a table which combines the IP and L2 levels (IP and L2 location tracking in 2 levels) and describes each of the possible combination state. The columns of Fig. 11 represent L2/IP; L2 released; Cell; and RRA. The indications in the table are self-explanating and thus do not need to be repeated here; the disclosure contents of this table as well as of any other of the attached Figs. being fully incorporated into the disclosure of the present invention.

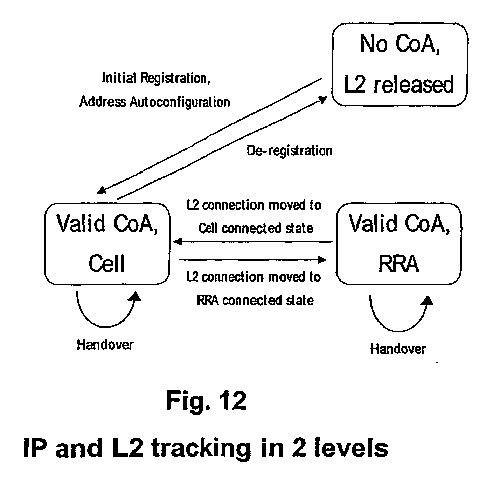

Fig. 12 shows the contents of the table of Fig. 11, i.e. IP and L2 tracking in 2 levels, in a state diagram format.

Note, that in Fig. 12, the term handover is used for a case where the cell and/or access router (i.e. IP BTS) is changed while there is an active data transmission. Also in the case when there is no data transmission (i.e. L2 RRA state) the handover term is used but it differs from the original idea of the handover and may also be termed e.g. "a change of the cell and/or access router" or "camping to a new cell/access router".

One skilled in the art knows that the invention can be used in other mobile networks also (including WLAN, IP RAN, UTRAN, GERAN, EDGE etc. based networks).

## Claims

1. Method for managing data flow between Mobile Nodes (MNs), Access Routers (AR) and peer nodes (HA, CNs), the method comprising the step of:
when a Mobile Node makes handover from a first Access Router (AR) to another Access Router (AR2, AR3, ... ARn) a decision is made whether the first Access Router (AR1) should act as an Anchor Access Router and forward data from the peer nodes (HA, CNs) to the Mobile Node via the new Access Router (AR2, AR3, ...ARn), or to send an update of the new position of the mobile node to a peer node (HA, CN), wherein the decision is made based on the time elapsed from a previous update sent to the peer nodes (HA, CNs).

2. A method according to claim 1, wherein the decision is made based on at least one of the following criterias:
- the number of peer nodes (HA, CN1, CN2, ... CNn) to which it has ongoing sessions,
- the traffic activity between the peer node(s) (HA, CN1, CN2, ...CNn) and the Mobile Node (MN),
- traffic load, or signaling load between mobile node and Access Router and/or peer nodes,
- the state of underlying layers, e.g. protocol layers 1 and/or 2,
- the state of the mobile node,
- the frequency of handovers.

3. A method according to claim 1 or 2, wherein the decision is made by the Mobile Node.

4. A method according to claim 1 or 2, wherein the decision is made by the network.

5. A method according to claim 1 or 2, wherein the decision is made by an entity in access network.

6. A method according to any of the claims 1 to 5, wherein the maximum number of handovers for which the same Anchor Access Router is kept is restricted to a pre-defined upper limit.

7. Method according to any one of the preceding claims, wherein the communication between the Mobile Node(s), the Access Routers (AR) and the peer nodes (HA, CNs) is effected based on Mobile IP.

8. Method according to any one of the preceding claims, wherein, when the Mobile Node has moved and selected a new Access Router as Anchor Access Router, a Binding Update message is always sent to the previous Access Router, the decision on whether to send Binding Update messages being always based on the criteria mentioned in claim 1 or 2, and/or on the number of times a Care-of Address (CoA) has changed without notifying a peer node.

9. Method according to any one of the preceding claims, wherein, when the Mobile Node has moved and selected a new Access Router as Anchor Access Router, a Binding Update message is always sent to the Anchor Access Router, the decision on whether to send Binding Update messages being always based on the criteria mentioned in claim 1 or 2, and/or on the number of times a Care-of Address (CoA) has changed without notifying a peer node.

10. Method according to any one of the preceding claims, wherein the handover of the Mobile Node from the first to the second Access Router is performed as defined in the Mobile IP or Fast Handovers for Mobile IPv6.

11. Method according to any one of the preceding claims, wherein the peer nodes include a Home Agent (HA) and/or a Correspondent Node (CN).

12. System for managing data flow between mobile nodes (MNs), Access Routers (AR) and peer nodes (HA, CNs), comprising deciding means for deciding, when a mobile node makes handover from a first Access Router (AR1) to another Access Router (AR2, AR3, ... ARn), whether the first Access Router (AR1) acts as an Anchor Access Router and forwards data from the peer nodes (HA, CNs) to the Mobile Node via the another Access Router (AR2, AR3, ...ARn), or to send an update of the new position of the mobile node to a peer node (HA, CN),
wherein the decision is made based on the time elapsed from a previous update sent to the peer nodes (HA, CNs).

13. A system according to claim 12, wherein the decision is made based on at least one of the following criterias:
- the number of peer nodes (HA, CN1, CN2, ... CNn) to which it has ongoing sessions,
- the traffic activity between the peer node(s) (HA, CN1, CN2, ...CNn) and the Mobile Node (MN),
- traffic load or signaling load, between mobile node and Access Router and/or peer nodes,
- the state of the underlying layers,
- the state of the mobile node,
- the frequency of handovers.

14. A system according to claim 12 or 13, wherein the deciding means is provided in the Mobile Node (MN).

15. A system according to claim 12 or 13, wherein the deciding means is included in the network.

16. A system according to claim 12 or 13, wherein the deciding means is included in an entity in access network.

17. A system according to any of the claims 12 to 16, wherein the maximum number of handovers for which the same Anchor Access Router is kept is restricted to a pre-defined upper limit.

18. A system according to any of the claims 12 to 17, wherein the Access router (AR) is a base station.

19. System according to any one of the preceding system claims, wherein the system is adapted to perform a handover of the Mobile Node from one Access Router to another Access Router as defined in the Mobile IP or Fast Handovers for Mobile IPv6.

20. System according to any one of the preceding system claims, wherein the peer nodes include a Home Agent (HA) and/or a Correspondent Node (CN).

## Patentansprüche

1. Verfahren zum Verwalten von Datenflüssen zwischen Mobilknoten (MNs), Zugangsleitweglenkungsknoten (AR) und Partnerknoten (HA, CNs), mit dem Schritt, dass,
wenn ein Mobilknoten eine Weiterreichung von einem ersten Zugangsleitweglenkungsknoten (AR1) zu einem anderen Zugangsleitweglenkungsknoten (AR2, AR3, ..., ARn) durchführt, eine Entscheidung darüber getroffen wird, ob der erste Zugangsleitweglenkungsknoten (AR1) als ein Anker-Zugangsleitweglenkungsknoten tätig sein und Daten von den Partnerknoten (HA, CNs) über den neuen Zugangsleitweglenkungsknoten (AR2, AR3, ..., ARn) an den Mobilknoten weiterleiten soll, oder ob eine Aktualisierung der neuen Position des Mobilknotens an einen Partnerknoten (HA, CN) zu senden ist, wobei die Entscheidung basierend auf der Zeit getroffen wird, die seit einer vorhergehenden Aktualisierung verstrichen ist, die an die Partnerknoten (HA, CNs) gesendet wurde.

2. Verfahren gemäß Anspruch 1, bei dem die Entscheidung basierend auf zumindest einem der folgenden Kriterien getroffen wird:
- die Anzahl von Partnerknoten (HA, CN1, CN2, ..., CNn), mit denen er laufende Sitzungen hat,
- die Verkehrsaktivität zwischen dem/den Partnerknoten (HA, CN1, CN2, ..., CNn) und dem Mobilknoten (MN),
- Verkehrslast oder Signalisierungslast zwischen Mobilknoten und Zugangsleitweglenkungsknoten und/oder Partnerknoten,
- der Zustand zugrunde liegender Schichten, z.B. Protokollschichten 1 und/oder 2,
- der Zustand des Mobilknotens,
- die Frequenz von Weiterreichungen.

3. Verfahren gemäß Anspruch 1 oder 2, bei dem die Entscheidung von dem Mobilknoten getroffen wird.

4. Verfahren gemäß Anspruch 1 oder 2, bei dem die Entscheidung von dem Netzwerk getroffen wird.

5. Verfahren gemäß Anspruch 1 oder 2, bei dem die Entscheidung von einer Instanz im Zugangsnetzwerk getroffen wird.

6. Verfahren gemäß einem der Ansprüche 1 bis 5, bei dem die maximale Anzahl von Weiterreichungen, für die der gleiche Anker-Zugangsleitweglenkungsknoten beibehalten wird, auf einen vordefinierten oberen Grenzwert beschränkt ist.

7. Verfahren gemäß einem der vorhergehenden Ansprüche, bei dem die Kommunikation zwischen dem/den Mobilknoten, den Zugangsleitweglenkungsknoten (AR) und den Partnerknoten (HA, CNs) basierend auf Mobile-IP ausgeführt wird.

8. Verfahren gemäß einem der vorhergehenden Ansprüche, bei dem, wenn sich der Mobilknoten bewegt und einen neuen Zugangsleitweglenkungsknoten als Anker-Zugangsleitweglenkungsknoten ausgewählt hat, immer eine Bindungsaktualisierungsnachricht an den vorhergehenden Zugangsleitweglenkungsknoten gesendet wird, wobei die Entscheidung darüber, ob Bindungsaktualisierungsnachrichten zu senden sind, immer auf den in Anspruch 1 oder 2 genannten Kriterien und/oder auf der Anzahl von Malen basiert, die sich eine Zustelladresse (CoA) ohne Benachrichtigung eines Partnerknotens geändert hat.

9. Verfahren gemäß einem der vorhergehenden Ansprüche, bei dem, wenn sich der Mobilknoten bewegt und einen neuen Zugangsleitweglenkungsknoten als Anker-Zugangsleitweglenkungsknoten ausgewählt hat, immer eine Bindungsaktualisierungsnachricht an den Anker-Zugangsleitweglenkungsknoten gesendet wird, wobei die Entscheidung darüber, ob Bindungsaktualisierungsnachrichten zu senden sind, immer auf den in Anspruch 1 oder 2 genannten Kriterien und/oder auf der Anzahl von Malen basiert, die sich eine Zustelladresse (CoA) ohne Benachrichtigung eines Partnerknotens geändert hat.

10. Verfahren gemäß einem der vorhergehenden Ansprüche, bei dem die Weiterreichung des Mobilknotens von dem ersten zu dem zweiten Zugangsleitweglenkungsknoten durchgeführt wird, wie es bei Mobile-IP oder für schnelle Weiterreichungen für Mobile-IPv6 definiert ist.

11. Verfahren gemäß einem der vorhergehenden Ansprüche, bei dem die Partnerknoten einen Heimatagenten (HA) und/oder einen Korrespondenzknoten (CN) umfassen.

12. System zum Verwalten von Datenflüssen zwischen Mobilknoten (MNs), Zugangsleitweglenkungsknoten (AR) und Partnerknoten (HA, CNs), mit einer Entscheidungseinrichtung zum Entscheiden, wenn ein Mobilknoten eine Weiterreichung von einem ersten Zugangsleitweglenkungsknoten (AR1) zu einem anderen Zugangsleitweglenkungsknoten (AR2, AR3 ..., ARn) durchführt, ob der erste Zugangsleitweglenkungsknoten (AR1) als ein Anker-Zugangsleitweglenkungsknoten tätig wird und Daten von den Partnerknoten (HA, CNs) über den anderen Zugangsleitweglenkungsknoten (AR2, AR3, ..., ARn) an den Mobilknoten weiterleitet, oder ob eine Aktualisierung der neuen Position des Mobilknotens an einen Partnerknoten (HA, CN) zu senden ist,
wobei die Entscheidung basierend auf der Zeit getroffen wird, die seit einer vorhergehenden Aktualisierung verstrichen ist, die an die Partnerknoten (HA, CNs) gesendet wurde.

13. System gemäß Anspruch 12, bei dem die Entscheidung basierend auf zumindest einem der folgenden Kriterien getroffen wird:
- die Anzahl von Partnerknoten (HA, CN1, CN2, ... CNn), mit denen er laufende Sitzungen hat,
- die Verkehrsaktivität zwischen dem/den Partnerknoten (HA, CN1, CN2, ...CNn) und dem Mobilknoten (MN),
- Verkehrslast oder Signalisierungslast zwischen Mobilknoten und Zugangsleitweglenkungsknoten und/oder Partnerknoten,
- der Zustand der zugrunde liegenden Schichten,
- der Zustand des Mobilknotens,
- die Frequenz von Weiterreichungen.

14. System gemäß Anspruch 12 oder 13, bei dem die Entscheidungseinrichtung im Mobilknoten (MN) bereitgestellt ist.

15. System gemäß Anspruch 12 oder 13, bei dem die Entscheidungseinrichtung im Netzwerk enthalten ist.

16. System gemäß Anspruch 12 oder 13, bei dem die Entscheidungseinrichtung in einer Instanz im Zugangsnetzwerk enthalten ist.

17. System gemäß einem der Ansprüche 12 bis 16, bei dem die maximale Anzahl von Weiterreichungen, für die der gleiche Anker-Zugangsleitweglenkungsknoten beibehalten wird, auf einen vordefinierten oberen Grenzwert beschränkt ist.

18. System gemäß einem der Ansprüche 12 bis 17, bei dem der Zugangsleitweglenkungsknoten (AR) eine Basisstation ist.

19. System gemäß einem der vorhergehenden Systemansprüche, wobei das System angepasst ist, eine Weiterreichung des Mobilknotens von einem Zugangsleitweglenkungsknoten zu einem anderen Zugangsleitweglenkungsknoten durchzuführen, wie es bei Mobile-IP oder für schnelle Weiterreichungen für Mobile-IPv6 definiert ist.

20. System gemäß einem der vorhergehenden Systemansprüche, bei dem die Partnerknoten einen Heimatagenten (HA) und/oder einen Korrespondenzknoten (CN) umfassen.

## Revendications

1. Procédé de gestion d'un flux de données entre des noeuds mobiles (MN), des routeurs d'accès (AR) et des noeuds homologues (HA, CN), le procédé comprenant l'étape consistant à :
lorsqu'un noeud mobile exécute un transfert intercellulaire depuis un premier routeur d'accès (AR) vers un autre routeur d'accès (AR2, AR3, ..., ARn), prendre une décision permettant d'apprécier si le premier routeur d'accès (AR1) doit, ou non, servir de routeur d'accès d'ancrage et transférer des données depuis les noeuds homologues (HA, CNs) vers le noeud mobile par le biais du nouveau routeur d'accès (AR2, AR3, ..., ARn), ou envoyer une mise à jour de la nouvelle position du noeud mobile vers un noeud homologue (HA, CN), dans lequel la décision est prise sur la base de la durée écoulée depuis qu'une précédente mise à jour a été envoyée vers les noeuds homologues (HA, CNs).

2. Procédé selon la revendication 1, dans lequel la décision est prise sur la base d'au moins un des critères suivants :
- le nombre de noeuds homologues (HA, CN1, CN2, ... CNn) avec lesquels il a des sessions en cours ;
- l'activité de trafic entre le (les) noeud(s) homologue(s) (HA, CN1, CN2, ..., CNn) et le noeud mobile (MN) ;
- la charge de trafic, ou la charge de signalisation entre le noeud mobile et le routeur d'accès et/ou les noeuds homologues ;
- l'état des couches sous-jacentes, comme, par exemple, les couches de protocole 1 et/ou 2 ;
- l'état du noeud mobile ;
- la fréquence des transferts intercellulaire.

3. Procédé selon la revendication 1 ou 2, dans lequel la décision est prise par le noeud mobile.

4. Procédé selon la revendication 1 ou 2, dans lequel la décision est prise par le réseau.

5. Procédé selon la revendication 1 ou 2, dans lequel la décision est prise par une entité dans le réseau d'accès.

6. Procédé selon l'une des revendications 1 à 5, dans lequel le nombre de transferts intercellulaire maximum pour lequel le même routeur d'accès d'ancrage est conservé, est limité à une limite supérieure prédéfinie.

7. Procédé selon l'une quelconque des revendications précédentes, dans lequel la communication entre le (les) noeud(s) mobile(s), les routeurs d'accès (AR) et les noeuds homologues (HA, CNs) s'effectue sur la base du protocole IP Mobile.

8. Procédé selon l'une quelconque des revendications précédentes, dans lequel, lorsque le noeud mobile s'est déplacé et a sélectionné un nouveau routeur d'accès comme routeur d'accès d'ancrage, un message de mise à jour de liaison est toujours envoyé vers le précédent routeur d'accès, la décision relative à l'envoi, ou non, de messages de mise à jour de liaison étant toujours prise sur la base des critères mentionnés dans la revendication 1 ou 2, et/ou en fonction du nombre de fois où une adresse "aux bons soins de" (CoA) a changé sans qu'un noeud homologue en soit averti.

9. Procédé selon l'une quelconque des revendications précédentes, dans lequel, lorsque le noeud mobile s'est déplacé et a sélectionné un nouveau routeur d'accès comme routeur d'accès d'ancrage, un message de mise à jour de liaison est toujours envoyé vers le routeur d'accès d'ancrage, la décision relative à l'envoi, ou non, de messages de mise à jour de liaison étant toujours prise sur la base des critères mentionnés dans la revendication 1 ou 2, et/ou en fonction du nombre de fois où une adresse "aux bons soins de" (CoA) a changé sans qu'un noeud homologue en soit averti.

10. Procédé selon l'une quelconque des revendications précédentes, dans lequel le transfert intercellulaire du noeud mobile depuis le premier routeur d'accès vers le deuxième routeur d'accès est exécuté de la façon définie dans le protocole IP Mobile ou le protocole de transferts intercellulaire rapides pour les mobiles IPv6.

11. Procédé selon l'une quelconque des revendications précédentes, dans lequel les noeuds homologues comprennent un agent domestique (HA) et/ou un noeud correspondant (CN).

12. Système de gestion de flux de données entre des noeuds mobiles (MNs), des routeurs d'accès (AR) et des noeuds homologues (HA, CNs), comprenant des moyens de décision pour décider, lorsqu'un noeud mobile exécute un transfert intercellulaire depuis un premier routeur d'accès (AR1) vers un autre routeur d'accès (AR2, AR3,ARn), si le premier routeur d'accès (AR1) sert, ou non, de routeur d'accès d'ancrage et transfère des données depuis les noeuds homologues (HA, CNs) vers le noeud mobile par le biais de l'autre routeur d'accès (AR2, AR3, ..ARn), ou envoyer une mise à jour de la nouvelle position du noeud mobile vers un noeud homologue (HA, CN) ;
dans lequel la décision est prise sur la base de la durée écoulée depuis qu'une précédente mise à jour a été envoyée vers les noeuds homologues (HA, CNs).

13. Système selon la revendication 12, dans lequel la décision est prise sur la base d'au moins un des critères suivants :
- le nombre de noeuds homologues (HA, CN1, CN2, ..., CNn) avec lesquels il a des sessions en cours ;
- l'activité de trafic entre le (les) noeud(s) homologue(s) (HA, CN1, CN2, ..., CNn) et le noeud mobile (MN) ;
- la charge de trafic, ou la charge de signalisation entre le noeud mobile et le routeur d'accès et/ou les noeuds homologues ;
- l'état des couches sous-jacentes ;
- l'état du noeud mobile ;
- la fréquence des transferts intercellulaire.

14. Système selon la revendication 12 ou 13, dans lequel les moyens de décision sont fournis dans le noeud mobile (MN).

15. Système selon la revendication 12 ou 13, dans lequel les moyens de décision sont inclus dans le réseau.

16. Système selon la revendication 12 ou 13, dans lequel les moyens de décision sont inclus dans une entité dans le réseau d'accès.

17. Système selon l'une des revendications 12 à 16, dans lequel le nombre de transferts intercellulaire maximum pour lequel le même routeur d'accès d'ancrage est conservé, est limité à une limite supérieure prédéfinie.

18. Système selon l'une quelconque des revendications 12 à 17, dans lequel le routeur d'accès (AR) est une station de base.

19. Système selon l'une quelconque des revendications précédentes, dans lequel le système est adapté pour exécuter un transfert intercellulaire du noeud mobile depuis un routeur d'accès vers un autre routeur d'accès de la façon définie dans le protocole IP Mobile ou le protocole de transferts intercellulaire rapides pour les mobiles IPv6.

20. Système selon l'une quelconque des revendications précédentes, dans lequel les noeuds homologues comprennent un agent domestique (HA) et/ou un noeud correspondant (CN).
